# EUROPEAN PATENT APPLICATION

(11) **EP 4 606 612 A1**
(43) Date of publication of application: **27.08.2025**
(21) Application number: 23894789.9
(22) Date of filing: 27.09.2023
(51) Int. Cl.: B60K 6/26, B60K 6/38

(54) **ROTOR HUB AND HYBRID DRIVE MODULE EQUIPPED WITH SAME**

(30) Priority: 21.11.2022 KR 20220156647
(71) Applicant: Valeo Kapec Co., Ltd., Daegu 42709 (KR)
(72) Inventor: KIM, Jung-Woo, Daegu 42709 (KR); PARK, Jin-Su, Daegu 42709 (KR); JO, A-Ron, Daegu 42709 (KR)
(74) Representative: Isarpatent
(86) International application number: PCT/KR2023/015040
(87) International publication number: WO 2024/111859

(57) **Abstract**

The present invention provides a rotor hub (10) for a hybrid drive module, in which a driving shaft (45) connected to an engine is disposed forward, and an output hub (70) connected to a transmission is disposed rearward. The rotor hub (10) includes a hub shaft (11) disposed at a centripetal side and extending in an axial direction, a front cover (20) manufactured as a component provided separately from the hub shaft (11), connected to the hub shaft (11), and extending radially outward from the hub shaft (11), a connector (30) manufactured as a component provided separately from the front cover (20), connected to the front cover (20), and disposed to be closer to a centrifugal side than the front cover (20), and an outer carrier (36) manufactured as a component provided separately from the connector (30), connected to the connector (30), extending forward from the connector (30), and having an inner periphery on which inward teeth (37) for installing a friction plate (48) are provided. An outer periphery of the connector (30) and an outer periphery of the outer carrier (36) provide a surface for supporting a rotor (16).

## Description

### [Technical Field]

This application claims priority to and the benefit of Korean Patent Application No. 10-2022-0156647 filed in the Korean Intellectual Property Office on November 21, 2022, the entire contents of which are incorporated herein by reference.

The present invention relates to a hybrid drive module, and more particularly, to a rotor hub having a structure in which the number of components is reduced, and teeth for installing an engine clutch and a lock-up clutch are easily manufactured, and a hybrid drive module equipped with the same.

### [Background Art]

A drive module used for a hybrid vehicle has a structure configured to transmit a force of a motor and a force of an engine to a transmission. A hybrid drive module includes a driving shaft configured to receive a force from the engine, a rotor hub on which a rotor of the motor is installed, an engine clutch configured to connect the driving shaft and the rotor hub, an output hub configured to receive a force of the motor and/or the engine from the rotor hub and transmit the force to the transmission, and a power transmission part configured to connect the motor and the output hub. The power transmission part may be structured to directly connect the motor and the output hub or structured to include a torque converter and a lock-up clutch.

The engine clutch configured to selectively connect the engine and the rotor hub is installed on the rotor hub, and the lock-up clutch configured to selectively connect the rotor hub and the output hub is installed on the rotor hub. Because the rotor is provided on an outer periphery of the rotor hub, a shape for installing a friction plate of the engine clutch and a lock-up friction plate of the lock-up clutch is provided on the rotor hub and disposed radially inward of the rotor.

Because the rotor hub has a complex shape, the rotor hub is manufactured by manufacturing several components separately and then coupling the components by welding or the like.

Patent Document 1 discloses a structure in which teeth for installing the friction plate and the lock-up friction plate at front and rear sides of an inner peripheral surface of the rotor hub are processed. The rotor hub in Patent Document 1 also includes several components. Among the components, a shape of the component on which teeth need to be processed has a structure that makes it difficult to process the teeth. A highly difficult process, such as flow forming, is required to process the teeth on the component having the above-mentioned structure.

Further, because of process characteristics, it is difficult for the flow forming to form the teeth only in a predetermined section in an axial direction. For this reason, there occurs a constraint on design because the design needs to be performed on the premise that the teeth are formed to an end based on the axial direction when the flow forming is applied to the tooth processing.

There is Patent Document CN 214647538 U as a document of a related art.

### [Disclosure]

### [Technical Problem]

The present invention has been made in an effort to solve the above-mentioned problem, and an object of the present invention is to provide a rotor hub structure, in which the number of components of a rotor hub having a complex shape may be minimized, and teeth for installing an engine clutch and a lock-up clutch may be simply processed, and a hybrid drive module equipped with the same.

The present invention has also been made in an effort to provide a rotor hub structure, in which teeth may be processed without applying a highly difficult processing technology such as a flow forming process, and a hybrid drive module equipped with the same.

The present invention has also been made in an effort to provide a rotor hub structure, in which teeth are processed by applying an easy processing technology such as a broaching process or a pressing process, and a hybrid drive module equipped with the same.

The present invention has also been made in an effort to provide a rotor hub structure capable of being designed such that teeth are provided only in a partial section in an axial direction, and a hybrid drive module equipped with the same.

The technical objects of the present invention are not limited to the above-mentioned objects, and other objects and advantages of the present invention, which are not mentioned above, may be understood from the following descriptions and more clearly understood from the embodiment of the present invention. In addition, it can be easily understood that the objects and advantages of the present invention may be realized by means defined in the claims and a combination thereof.

### [Technical Solution]

In order to achieve the above-mentioned objects, the present invention may be applied to a rotor hub (10) for a hybrid drive module, in which a driving shaft (45) connected to an engine is disposed forward, and an output hub (70) connected to a transmission is disposed rearward.

Driving power may or may not be transmitted to the driving shaft (45) and a front portion of the rotor hub (10) by engine clutches (47, 48, and 36).

Driving power may or may not be transmitted to a rear portion of the rotor hub (10) and the output hub (70) by lock-up clutches (29, 82, and 83).

The rear portion of the rotor hub (10) and the output hub (70) may be fluid-coupled by tori (51, 60, and 65).

The tori (51, 60, and 65) may be torque converters or fluid clutches.

The rotor hub 10 includes a hub shaft (11), a front cover (20), a connector (30), and an outer carrier (36)) that are manufactured as separate components and then assembled.

The rotor hub (10) may further include a lock-up clutch carrier (29) that is manufactured as a separate component and then assembled.

The hub shaft (11) is disposed at a centripetal side of the rotor hub (10) and extends in an axial direction.

The hub shaft (11) may include a shaft (12) extending in the axial direction, and the first radial extension portion (13) extending in a centrifugal direction from an outer periphery of the shaft (12).

The front cover (20) is manufactured as a component provided separately from the hub shaft (11) and connected to the hub shaft (11).

The front cover (20) extends radially outward from a connection portion connected to the hub shaft (11).

The front cover (20) may include a second radial extension portion (23) connected to the first radial extension portion (13) of the hub shaft (11) and extending in the centrifugal direction from the first radial extension portion (13).

The front cover (20) may further include a rearward extension portion (25) extending rearward from a centrifugal end of the second radial extension portion (23).

The front cover (20) may further include a radially enlarged portion (27) connected to a rear end of the rearward extension portion (25) and extending in the centrifugal direction.

The connector (30) may be manufactured as a component provided separately from the front cover (20) and connected to the front cover (20).

The connector (30) is disposed to be closer to the centrifugal side than the front cover (20).

The connector (30) may include a third radial extension portion (33) connected to the front cover (20) and extending in the centrifugal direction from the front cover (20).

The third radial extension portion (33) may be connected to a second radial extension portion (23) of the front cover (20).

The connector (30) may further include a first axial extension portion (35) extending rearward from a centrifugal end of the third radial extension portion (33).

The first axial extension portion (35) may be disposed to be closer to the centrifugal side than the rearward extension portion (25).

A stopper (354) may be provided at a rear end of the first axial extension portion (35) and extend radially outward. The stopper (354) may restrict an axial position of the rotor (16) with respect to the rotor hub (10).

A radially enlarged portion (27) of the front cover (20) may be disposed rearward of the connector (30) and further extend outward in the radial direction than the connector (30).

The outer carrier (36) may be manufactured as a component provided separately from the connector (30) and then connected to the connector (30).

The outer carrier (36) is connected to a front side of the connector (30).

The outer carrier (36) extends forward from a connection portion connected to the connector (30).

The outer carrier (36) may have a second axial extension portion (362) extending in the axial direction.

Inward teeth (37) for installing a friction plate (48) are provided on an inner periphery of the outer carrier (36).

The inward teeth (37) may be provided on an inner periphery of the second axial extension portion (362).

The friction plate (48) of the engine clutches (47, 48, and 36) may be installed radially inside the inward teeth (37).

The outer periphery of the connector (30) and the outer periphery of the outer carrier (36) may be connected in the axial direction and provide a surface for supporting the rotor (16).

The inward teeth (37) of the outer carrier (36) may include a structure in which a plurality of body portions (371) extending in the axial direction and a plurality of groove portions (372) extending in the axial direction are alternately disposed in the circumferential direction.

The outer carrier (36) may not have any portion further extending inward than an inner diameter corresponding to bottom surfaces (B) of the plurality of groove portions (372), other than the body portion (371).

Therefore, a space, in which a tool may move in the axial direction, may be ensured radially inside the body portion (371). When this space is utilized, broaching processing is easily performed on the groove portion (372) in a state in which the groove portion (372) is not yet processed in the body portion (371).

According to the present invention, the outer carrier (36) with this structure may facilitate the processing of the inward teeth (37).

A centrifugal end of the first radial extension portion (13) of the hub shaft (11) may have a first radial junction surface (135) having a normal line in the centrifugal direction, and a first axial junction surface (133) further extending in the centrifugal direction than the first radial junction surface (135) and having a normal line in the axial direction.

The normal line of the first axial junction surface (133) may be directed forward.

A centripetal end of the second radial extension portion (23) of the front cover (20) may have a second radial junction surface (232) having a normal line in the centripetal direction, and a second axial junction surface (231) further extending in the centrifugal direction than the second radial junction surface (232) and having a normal line in the axial direction.

The normal line of the second axial junction surface (231) may be directed rearward.

The first axial junction surface (133) of the hub shaft (11) and the second axial junction surface (231) of the front cover (20) may face and adjoin each other in the axial direction. Therefore, an axial position of the front cover (20) with respect to the hub shaft (11) may be restricted.

The first radial junction surface (135) of the hub shaft (11) and the second radial junction surface (232) of the front cover (20) may face and adjoin each other in the radial direction. Therefore, the hub shaft (11) and a center of the front cover (20) may be aligned.

The junction portion between the first radial junction surface (135) of the hub shaft (11) and the second radial junction surface (232) of the front cover (20) are welded to each other at sides opposite to the first axial junction surface (133) and the second axial junction surface (231) in the axial direction. Therefore, the welding process may be smoothly performed.

The junction portion between the first radial junction surface (135) and the second radial junction surface may be welded from the front side.

Therefore, the hub shaft (11) and the front cover (20) may be manufactured as separate components. For example, the hub shaft (11) may be manufactured by casting process and machining process, and the front cover (20) may be manufactured by sheet metal pressing.

A front surface of the second radial extension portion (23) of the front cover (20) may have a third radial junction surface (234) having a normal line in the centrifugal direction, and a third axial junction surface (233) further extending in the centrifugal direction than the third radial junction surface (234) and having a normal line directed forward.

A centripetal end of the third radial extension portion (33) of the connector (30) may have a fourth radial junction surface (332) having a normal line in the centripetal direction, and a fourth axial junction surface (331) further extending in the centrifugal direction than the fourth radial junction surface (332) and having a normal line directed rearward.

The third axial junction surface (233) of the front cover (20) and the fourth axial junction surface (331) of the connector (30) may face and adjoin each other in the axial direction. Therefore, an axial position of the connector (30) with respect to the front cover (20) may be restricted.

The third radial junction surface (234) of the front cover (20) and the fourth radial junction surface (332) of the connector (30) may face and adjoin each other in the radial direction. Therefore, the front cover (20) and a center of the connector (30) may be aligned.

The third radial junction surface (234) and the fourth radial junction surface (332) may be welded to each other at front sides thereof. Therefore, the welding process may be smoothly performed.

Therefore, the connector (30) and the front cover (20) may be manufactured as separate components. The process of manufacturing the connector (30) and the process of manufacturing the front cover (20) may be different from each other.

A front end of the first axial extension portion (35) of the connector (30) may have a fifth radial junction surface (352) having a normal line in the centrifugal direction, and a fifth axial junction surface (351) further extending in the centrifugal direction than the fifth radial junction surface (352) and having a normal line directed forward.

A rear end of the second axial extension portion (362) of the outer carrier (36) may have a sixth radial junction surface (382) having a normal line in the centripetal direction, and a sixth axial junction surface (381) further extending in the centrifugal direction than the sixth radial junction surface (382) and having a normal line directed rearward.

The fifth axial junction surface (351) and the sixth axial junction surface (381) may face and adjoin each other in the axial direction. Therefore, an axial position of the outer carrier (36) with respect to the connector (30) may be restricted.

The fifth radial junction surface (352) and the sixth radial junction surface (382) may face and adjoin each other in the radial direction. Therefore, the connector (30) and a center of outer carrier (36) may be aligned.

The fifth axial junction surface (351) and the sixth axial junction surface (381) may be welded to each other at the centrifugal side. Therefore, the welding process may be smoothly performed.

Therefore, the connector (30) and the outer carrier (36) may be manufactured as separate components.

A welded portion between the fifth axial junction surface (351) and the sixth axial junction surface (381) may be processed together with the outer peripheral surface of the first axial extension portion (35) and the outer peripheral surface of the second axial extension portion (362).

Therefore, a concave-convex shape of the welded portion may be smoothly processed and constitute one cylindrical outer periphery surface together with the first axial extension portion (35) and the second axial extension portion (362).

A key groove (14) may be provided on the cylindrical outer periphery surface, be recessed in the radial direction, and extend in the axial direction. Therefore, a circumferential position of the rotor (16) with respect to the rotor hub (10) may be restricted.

The lock-up clutch carrier (29) may be manufactured as a component provided separately from the front cover (20) and then connected to the front cover (20).

The lock-up clutch carrier (29) may extend rearward from the connection portion connected to the front cover (20).

An inward concave-convex portion (297) for installing a lock-up friction plate (82) of lock-up clutches (29, 82, and 83) may be provided on an inner periphery of the lock-up clutch carrier (29) extending rearward.

The lock-up clutch carrier (29) may include fourth radial extension portions (13, 23, and 33) connected to the second radial extension portion (23) and extending in the centrifugal direction from the connection portion, and a third axial extension portion (296) extending rearward from centrifugal ends of the fourth radial extension portions (13, 23, and 33).

The inward concave-convex portion (297) may be provided on the third axial extension portion (296).

A rear surface of the second radial extension portion (23) of the front cover (20) may have a seventh radial junction surface (236) having a normal line in the centrifugal direction, and a seventh axial junction surface (235) further extending in the centrifugal direction than the seventh radial junction surface (236) and having a normal line directed rearward.

A centripetal end of the fourth radial extension portions (13, 23, and 33) may have an eighth radial junction surface (293) having a normal line in the centripetal direction, and an eighth axial junction surface (292) further extending in the centrifugal direction than the eighth radial junction surface (293) and having a normal line directed forward.

The seventh axial junction surface (235) and the eighth axial junction surface (292) may face and adjoin each other in the axial direction. Therefore, an axial position of the lock-up clutch carrier (29) with respect to the front cover (20) may be restricted.

The seventh radial junction surface (236) and the eighth radial junction surface (293) may face and adjoin each other in the radial direction. Therefore, the front cover (20) and a center of the lock-up clutch carrier (29) may be aligned.

The seventh radial junction surface (236) and the eighth radial junction surface (293) may be welded to each other at rear sides thereof. Therefore, the welding process may be smoothly performed.

An axial length (L3) of the third axial extension portion (296) of the lock-up clutch carrier (29) may be set to be shorter than an axial length of the rearward extension portion (25) of the front cover (20).

The axial length (L3) of the inward concave-convex portion (297) may be shorter than an axial length (L1) of the inward teeth (37).

Therefore, the inward concave-convex portion (297) is more smoothly processed while the sheet metal processing is performed on the lock-up clutch carrier (29).

In addition, in order to achieve the above-mentioned objects, the present invention provides a hybrid drive module including the rotor hub (10).

The hybrid drive module may further include: a rotor (16) installed on an outer periphery of the connector (30) and an outer periphery of the outer carrier (36).

For convenience of description, a section in which the inward teeth (37) extend in the axial direction is referred to as a first axial section (L1).

An axial center of the rotor (16) may be disposed in the first axial section (L1) in the axial direction.

An oil hole (39) may be provided in the outer carrier (36) and connect an inner space and an outer space, which are disposed radially inward and outward of the outer carrier (36), respectively, and an outer space so that the inner space and the outer space communicate with each other.

The oil hole (39) may be disposed in the first axial section (L1).

Therefore, the oil, which cools the friction plate (48) installed on the inward teeth (37), may be moved toward the rotor (16) through the oil hole (39) by a centrifugal force and cool the rotor (16). The oil hole (39) may be disposed in the vicinity of a center of the rotor (16) based on the axial direction, such that the rotor (16) may be more efficiently cooled.

For convenience of description, a section in which the outer carrier (36) extends in the axial direction is referred to as a second axial section (L2).

The axial extension portions (35 and 362) for supporting the rotor (16) are configured by the outer carrier (36) and the connector (30), such that a larger portion of the first axial section (L1) may be disposed at the rear side based on the axial central portion of the second axial section (L2).

### [Advantageous Effects]

According to the present invention, the number of components of the rotor hub, which needs to have a complex shape, may be minimized, and the components may be manufactured by using the processing method most efficient for the components, which may reduce the manufacturing costs for the rotor hub.

According to the present invention, the rotor hub is distinguished and implemented as a component having a shape that allows the teeth for installing the engine clutch and the lock-up clutch to be simply processed, such that the rotor hub is more easily manufactured.

According to the present invention, the outer carrier is manufactured as a separate component, such that the teeth may be processed even by an easy processing technology, such as broaching processing, without applying a highly difficult processing technology such as a flow forming process.

According to the present invention, the lock-up clutch carrier having a shorter axial extension portion is distinguished and manufactured as a separate component, such that the teeth may be simply processed by a pressing process.

According to the present invention, the teeth may be formed only in the section in which the teeth are required in the axial direction.

According to the present invention, the stopper, which restricts the axial rear position of the rotor, may be formed integrated with the connector, which may reduce the number of components.

The specific effects of the present invention, together with the above-mentioned effects, will be described along with the description of specific items for carrying out the present invention.

### [Description of Drawings]

FIGS. 1 and 2 are cross-sectional side views of a hybrid drive module to which a rotor hub according to an exemplary embodiment of the present invention is applied.
FIG. 3 is an exploded cross-sectional perspective view of the rotor hub of the embodiment.
FIG. 4 is an exploded cross-sectional side view of the rotor hub of the embodiment.
FIG. 5 is a cross-sectional side view of the rotor hub of the embodiment.
FIG. 6 is a cross-sectional side view of the rotor hub of the embodiment in which a rotor is installed.
FIG. 7 is an enlarged view of part VII in FIG. 3.
FIG. 8 is a front view of an outer carrier of the rotor hub.

### [Description of Reference Numerals]

10: rotor hub, 11: hub shaft, 12: shaft, 13: first radial extension portion, 133: first axial junction surface, 135: first radial junction surface, 13, 23, 33: radial extension portion, 35, 362: axial extension portion, 14: key groove, 15: first bearing, 16: rotor, 17: stator, 18: main housing, 19: second bearing, 20: front cover, 23: second radial extension portion, 231: second axial junction surface, 232: second radial junction surface, 233: third axial junction surface, 234: third radial junction surface, 235: seventh axial junction surface, 236: seventh radial junction surface, 25: rearward extension portion, 27: radially enlarged portion, 29: lock-up clutch carrier, 291: fourth radial extension portion, 292: eighth axial junction surface, 293: eighth radial junction surface, 296: third axial extension portion, 297: inward concave-convex portion, L3: length, 30: connector, 33: third radial extension portion, 331: fourth axial junction surface, 332: fourth radial junction surface, 35: first axial extension portion, 351: fifth axial junction surface, 352: fifth radial junction surface, 354: stopper, 36: outer carrier, 362: second axial extension portion, L2: second axial section, 37: inward teeth, 371: body portion, 372: groove portion, B: bottom surface, L1: first axial section, 381: sixth axial junction surface, 382: sixth radial junction surface, 39: oil hole, 40: retainer, 41: piston plate, 42: elastic body, 43: chamber plate, 45: driving shaft, 46: centrifugal flange, 47: inner carrier, 470: centripetal flange, 471: outward teeth, 472: coupling rivet, 48: friction plate, 47, 48, 36: engine clutch, 51, 60, 65: torus, torque converter, 50: rear cover, 51: impeller, 52: third bearing, 60: reactor, 61: one-way clutch, 62: fourth bearing, 64: fixed end, 65: turbine, 66: turbine plate, 70: output hub, 72: spline portion, 75: spacer, 29, 82, 83: lock-up clutch, 81: lock-up piston, 82: lock-up friction plate, 83: lock-up clutch plate, 831: outward concave-convex portion, 90: pendulum assembly, 95: connection plate, 99: fastening rivet

### [Mode for Invention]

Hereinafter, exemplary embodiments of the present invention will be described in detail with reference to the accompanying drawings.

The present invention is not limited to the embodiments disclosed herein, but will be variously changed and implemented in various different forms. The embodiments are provided so that the present invention will be thorough and complete, and also to provide a more complete understanding of the scope of the present invention to those of ordinary skill in the art. Therefore, it should be understood that the present invention is not limited to the embodiments disclosed below, but the configuration of any one embodiment and the configuration of another embodiment can be substituted or added, and the present invention includes all alterations, equivalents, and alternatives that are included in the technical spirit and scope of the present invention.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of constituent elements may be exaggerated, increased, or decreased for convenience of understanding, but the protection scope of the present invention should not be restrictively construed.

The terms used in the present specification are used only for the purpose of describing particular examples or embodiments and are not intended to limit the present invention. Further, singular expressions include plural expressions unless clearly described as different meanings in the context. In the present application, the terms "comprises," "comprising," "includes," "including," "containing," "has," "having", and other variations thereof are intended to specify the presence of features, integers, steps, operations, elements, components, and/or combinations thereof disclosed in the specification. That is, in the present application, it should be understood that the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present application.

Because a hybrid drive module according to an embodiment is symmetrical with respect to an axis, only a half of the hybrid drive module based on the axis is illustrated for the convenience of illustration. In addition, for the convenience of description, a direction along a longitudinal direction of an axis defining a center of a rotation of the hybrid drive module is defined as an axial direction. That is, a forward/rearward direction or an axial direction is defined as a direction parallel to a rotation axis. A front (forward) means any one direction of a power source, e.g., a direction toward an engine. A rear (rearward) means the other direction, e.g., a direction toward a transmission. Therefore, a front surface means a surface facing forward, and a rear surface means a surface facing rearward.

A radial direction means a direction toward or away from a center of the rotation axis along a straight line passing through the center of the rotation axis on the plane perpendicular to the rotation axis. A direction radially away from the center is referred to as a centrifugal direction, and a direction toward the center is referred to as a centripetal direction.

A peripheral direction or a circumferential direction means a direction surrounding a periphery of the rotation axis. An outer periphery means an outer circumference, and an inner periphery means an inner circumference. Therefore, an outer peripheral surface is a surface facing away from the rotation axis, and an inner peripheral surface is a surface facing the rotation axis.

A circumferential surface means a surface, a normal line of which is directed in a circumferential direction.

### [Overall Structure of Hybrid Drive Module]

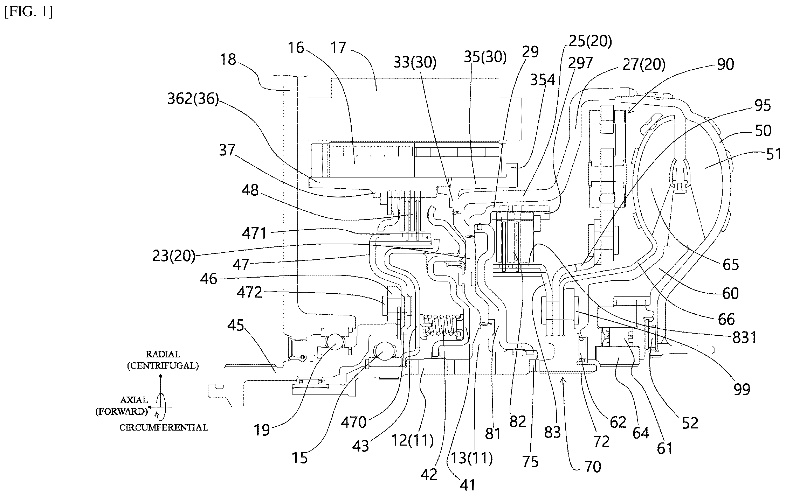

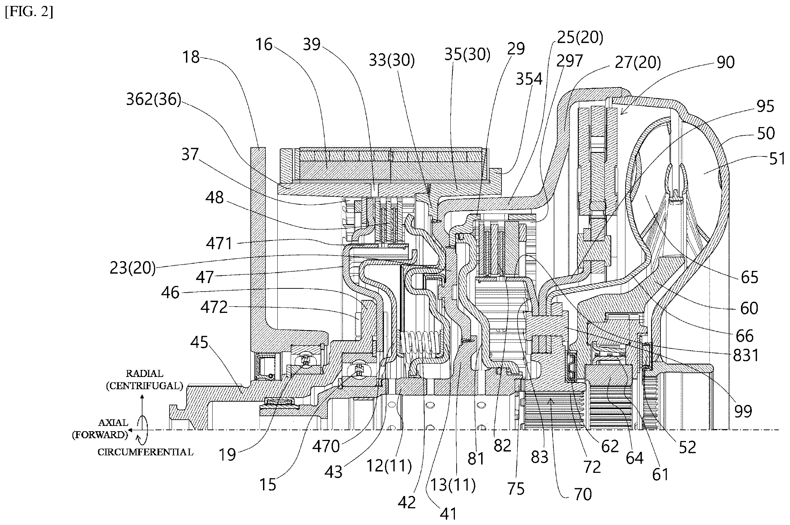

Hereinafter, an overall structure of an exemplary embodiment of a hybrid drive module according to the present invention will be described with reference to FIGS. 1 and 2.

The hybrid drive module includes a driving shaft 45 configured to receive a force from an engine, a motor including a stator 17 and a rotor 16, a main housing 18 in which the stator 17 is installed, a rotor hub 10 on which the rotor 16 is installed, the rotor hub 10 being configured to rotate together with the rotor 16, engine clutches 47, 48, and 36 disposed between the driving shaft 45 and the rotor hub 10 and configured to selectively connect the driving shaft 45 and the rotor hub 10 so that power of the driving shaft 45 is transmitted to the rotor hub 10, and a power transmission part disposed between the rotor hub 10 and an output hub 70 and configured to transmit a rotational force of the rotor hub 10 to the output hub 70.

The rotor hub 10 includes a hollow hub shaft 11 disposed at a centripetal side and extending in an axial direction, radial extension portions 13, 23, and 33 extending radially outward from the hub shaft 11, and axial extension portions 35 and 362 disposed at a centrifugal side, connected to the radial extension portions 13, 23, and 33, and extending in a forward/rearward direction. The rotor 16 is installed on outer peripheries of the axial extension portions 35 and 362.

The rotor hub 10 may be manufactured by coupling a plurality of components. The components, which constitute the rotor hub 10, may include the hub shaft 11, a front cover 20, a connector 30, and an outer carrier 36.

The hub shaft 11 includes a hollow shaft 12 extending in the forward/rearward direction, and a first radial extension portion 13 extending radially outward from an outer periphery of the shaft 12.

The front cover 20 includes a second radial extension portion 23 welded to a centrifugal side of the first radial extension portion 13 and extending radially outward, a rearward extension portion 25 extending rearward from a centrifugal side end of the second radial extension portion 23, and a radially enlarged portion 27 extending radially outward from a rear end of the rearward extension portion 25 and welded to a rear cover 50. A lock-up clutch carrier 29 may be welded to a rear surface of the second radial extension portion 23.

The connector 30 includes a third radial extension portion 33 welded to a centrifugal side of the second radial extension portion 23 and extending radially outward, and a first axial extension portion 35 connected to a centrifugal side of the third radial extension portion 33 and extending in the axial direction. The first axial extension portion 35 may be disposed radially outward of the rearward extension portion 25.

The outer carrier 36 includes a second axial extension portion 362 connected to the centrifugal side of the third radial extension portion 33 and a front end of the first axial extension portion 35 by welding and extending forward from the centrifugal side of the third radial extension portion 33 and the front end of the first axial extension portion 35. Inward teeth 37 are provided on an inner periphery of the second axial extension portion 362 and protrude in a centripetal direction. An outer peripheral surface of the second axial extension portion 362 constitutes a surface connected to an outer peripheral surface of the first axial extension portion 35. Therefore, the rotor 16 may be installed on the first axial extension portion 35 and the outer peripheral surface of the second axial extension portion 362.

The radial extension portions 13, 23, and 33 of the rotor hub 10 may include the first radial extension portion 13, the second radial extension portion 23, and the third radial extension portion 33. Further, the axial extension portions 35 and 362 of the rotor hub 10 may include the first axial extension portion 35 and the second axial extension portion 362.

When the rotor hub 10 is configured by coupling the plurality of components as described above, the most reasonable manufacturing method (e.g., die casting, sheet metal pressing, etc.) may be applied in accordance with shapes that the components need to have, such that costs required to manufacture the rotor hub 10 may be reduced.

The driving shaft 45 is provided forward of the hub shaft 11. The driving shaft 45 may be disposed coaxially with the hub shaft 11, configured to rotate relative to the hub shaft 11, and connected to the engine.

The driving shaft 45 may have a hollow portion, and the hollow portion may be opened rearward. The hub shaft 11 may enter the hollow portion of the driving shaft 45 from a rear side of the driving shaft 45 and be disposed in the hollow portion of the driving shaft 45.

An inner carrier 47 is coupled to the rear side of the driving shaft 45. The inner carrier 47 is coupled to the driving shaft 45 so that the inner carrier 47 is restricted in the axial direction and a rotation of the inner carrier 47 is restricted.

A centrifugal flange 46 extending radially outward is provided at a rear end of the driving shaft 45, and a centripetal flange 470 extending radially inward is provided on the inner carrier 47. A front surface of the centripetal flange 470 faces and adjoins a rear surface of the centrifugal flange 46, and the centripetal flange 470 and the centrifugal flange 46 are integrated by being coupled by a coupling rivet 472.

In order to axially align the driving shaft 45 and the hub shaft 11 while allowing a relative rotation between the driving shaft 45 and the hub shaft 11, bearings may be installed between an outer periphery of the hub shaft 11 and an inner periphery of the driving shaft 45. The bearings may be installed at two positions spaced apart from each other in the axial direction. As illustrated, a needle bearing may be installed at a front side based on the axial direction, and a first bearing 15 may be installed at a rear side based on the axial direction.

The first bearing 15 restricts axial positions of the driving shaft 45 and the hub shaft 11. To this end, a front side of an outer race of the first bearing 15 interferes with a stepped projection provided on the inner periphery of the driving shaft 45, and a rear side of the outer race interferes with a snap ring interposed between the driving shaft 45 and the inner carrier 47. Further, a rear side of an inner race of the first bearing 15 interferes with a stepped projection provided on the outer periphery of the hub shaft 11, and a front side of the inner race interferes with a snap ring installed on the outer periphery of the hub shaft 11.

Outward teeth 471 are provided at a centrifugal side of the inner carrier 47 and extend in the axial direction. The outward teeth 471 face the inward teeth 37 and are disposed to be spaced apart radially inward from the inward teeth 37 of the rotor hub 10. Further, a plurality of friction plates 48, which are restricted in rotation relative to the inward teeth 37, and a plurality of friction plates 48, which are restricted in rotation related to the outward teeth 471, are alternately installed in the axial direction between the inward teeth 37 and the outward teeth 471 and constitute the engine clutches 47, 48, and 36.

A chamber plate 43 is provided rearward of the inner carrier 47. The chamber plate 43 is installed on the shaft 12. A centripetal side end of the chamber plate 43 is interposed between the rear surface of the inner race of the first bearing 15 and the front surface of the stepped projection of the hub shaft 11, such that the axial position of the chamber plate 43 with respect to the hub shaft 11 is restricted.

A piston plate 41 is provided between the chamber plate 43, the friction plates 48, and the radial extension portions 13, 23, and 33 of the rotor hub 10. A centripetal side end of the piston plate 41 is installed on the surface of the hub shaft 11 so as to be slidable in the axial direction in a sealed state. A radial central portion of the piston plate 41 is installed to be slidable in the axial direction in a state of being sealed from the chamber plate 43 and installed to be slidable in the axial direction in a state of being sealed from the rotor hub 10.

A space between the rear surface of the piston plate 41 and the front surface of the rotor hub 10 defines a piston chamber, and a space between the front surface of the piston plate 41 and a rear surface of the chamber plate 43 defines a compensation chamber.

The piston chamber and the compensation chamber are filled with oil. Therefore, dynamic pressure applied to the oil in the piston chamber and the compensation chamber is constant even though a rotational velocity of the rotor hub 10 varies.

When positive pressure in the piston chamber increases as hydraulic pressure is transmitted to the piston chamber through the hollow portion of the hub shaft 11, the piston plate 41 moves forward and presses the friction plate 48 forward, such that a rotation of the driving shaft 45 is restricted by the rotor hub 10.

An elastic body 42 is installed between the chamber plate 43 and the piston plate 41 and elastically presses the chamber plate 43 and the piston plate 41 away from each other. Therefore, when a force by which positive pressure of the oil applied to the piston chamber presses the piston plate 41 forward becomes lower than an elastic force of the elastic body 42, the piston plate 41 may move away from the friction plate 48 while being moved immediately rearward by the elastic body 42, such that the restriction of the rotation of the driving shaft 45 related to the rotor hub 10 may be released. This configuration ensures a response speed of the engagement and disengagement of the engine clutches 47, 48, and 36.

The rotation of the driving shaft 45 is supported by the main housing 18, and the axial position of the driving shaft 45 is restricted. To this end, a second bearing 19 is installed between the outer periphery of the driving shaft 45 and the inner periphery of the main housing 18. The second bearing 19 is disposed forward of the first bearing 15 in the axial direction.

A rear side of an inner race of the second bearing 19 is restricted rearward by adjoining the stepped projection provided on the outer periphery of the driving shaft 45, and a front side of the inner race of the second bearing 19 is restricted forward by adjoining the snap ring inserted into the outer periphery of the driving shaft 45.

A front side of an outer race of the second bearing 19 is restricted forward by adjoining the stepped projection provided on the inner periphery of the main housing 18, and a rear side of the outer race of the second bearing 19 is restricted rearward by adjoining the snap ring inserted into the inner periphery of the main housing 18.

The power transmission part is disposed in an inner space defined by the front cover 20 provided on the rotor hub 10 and the rear cover 50 connected to the front cover 20. The inner space is disposed rearward of the rotor hub 10.

The power transmission part includes tori configured to transmit a rotational force, which is transmitted from the rotor hub 10 through the rear cover 50, to the output member, and lock-up clutches 29, 82, and 83 configured to transmit a rotational force, which is transmitted from the rotor hub 10, directly to the output member.

The tori may be torque converters 51, 60, and 65 including an impeller 51, a turbine 65, and a reactor 60. However, the present invention does not exclude a case in which the tori are fluid clutches including the impeller 51 and the turbine 65 without the reactor 60.

The torque converters 51, 60, and 65 include the impeller 51 installed on a front surface of the rear cover 50, the turbine 65 disposed forward of the impeller 51 and configured to face the impeller 51, and the reactor 60 disposed between the impeller 51 and the turbine 65.

An oil pump (not illustrated) may be connected to a centripetal side end of the rear cover 50 and produce pressure of the oil to be supplied to the hybrid drive module.

The turbine 65 is installed on a rear surface of a turbine plate 66. The turbine plate 66 extends in the centripetal direction from the turbine 65 and is fixed to the output hub 70 by a fastening rivet 99.

The reactor 60 is installed at a fixed end 64 by a one-way clutch 61 so as to be rotatable in one direction and restricted in rotation in the other direction. The fixed end 64 may be connected to the transmission and kept fixed.

The lock-up clutches 29, 82, and 83 include the lock-up clutch carrier 29 having an inward concave-convex portion 297 provided on the inner periphery thereof and extending in the axial direction, a lock-up clutch plate 83 fixed to the output hub 70 by the fastening rivet 99 and having an outward concave-convex portion 831 provided radially inside the inward concave-convex portion 297 and configured to face the inward concave-convex portion 297 in the radial direction, and a lock-up friction plate 82 disposed between the inward concave-convex portion 297 and the outward concave-convex portion 831.

The lock-up friction plate 82 may have a structure in which the lock-up friction plate 82, which is restricted in rotation by the inward concave-convex portion 297, and the lock-up friction plate 82, which is restricted in rotation by the outward concave-convex portion 831, are alternately disposed in the axial direction.

A lock-up piston 81 is installed between the lock-up friction plate 82, the lock-up clutch plate 83, and the radial extension portions 13, 23, and 33 of the rotor hub 10. A centrifugal end of the lock-up piston 81 is installed on an inner peripheral surface of the lock-up clutch carrier 29 and configured to be slidable in the axial direction in a sealed state, and a centripetal end of the lock-up piston 81 is installed on an outer peripheral surface of the shaft 12 and configured to be slidable in the axial direction in a sealed state.

A space between the radial extension portions 13, 23, and 33 and the lock-up piston 81 defines a lock-up chamber. When hydraulic pressure is transmitted to the lock-up chamber through the hollow portion of the hub shaft 11 and a force by which the hydraulic pressure in the lock-up chamber pushes the lock-up piston 81 rearward becomes higher than a force by which the hydraulic pressure at the rear side of the lock-up piston 81 pushes the lock-up piston 81 forward, the lock-up piston 81 moves rearward and presses the lock-up friction plate 82 rearward, and the rotor hub 10 is restricted in rotation by the output hub 70 by means of the lock-up clutch plate 83. That is, the rotor hub 10 and the output hub 70 are connected directly.

A third bearing 52 is installed between the rear cover 50 and the reactor 60 and supports a relative rotation between the rear cover 50 and the reactor 60. In addition, a fourth bearing 62 is installed between the reactor 60 and the output hub 70 and supports a relative rotation between the reactor 60 and the output hub 70. Further, a spacer 75 is interposed between the output hub 70 and the hub shaft 11 and supports a relative rotation between the output hub 70 and the hub shaft 11. The spacer 75 allows a flow of a fluid through the corresponding space while maintaining an interval between the output hub 70 and the hub shaft 11.

A pendulum assembly 90 is disposed between the lock-up clutches 29, 82, and 83 and the tori 51, 60, and 65 in the axial direction. An outer peripheral side of the pendulum assembly 90 is disposed between the radially enlarged portion 27 of the front cover 20 and the tori 51, 60, and 65. Therefore, it is possible to ensure the maximum moment of inertia of the pendulum.

A connection plate 95 is connected to a centripetal side of the pendulum assembly 90, extends radially inward from the centripetal side of the pendulum assembly 90, fixed to the output hub 70 by the fastening rivet 99.

A spline portion 72 is provided on an inner peripheral surface of the output hub 70, and the spline portion 72 engages with an input shaft of the transmission and transmits an output from the hybrid drive module to the transmission.

### [Rotor Hub Structure]

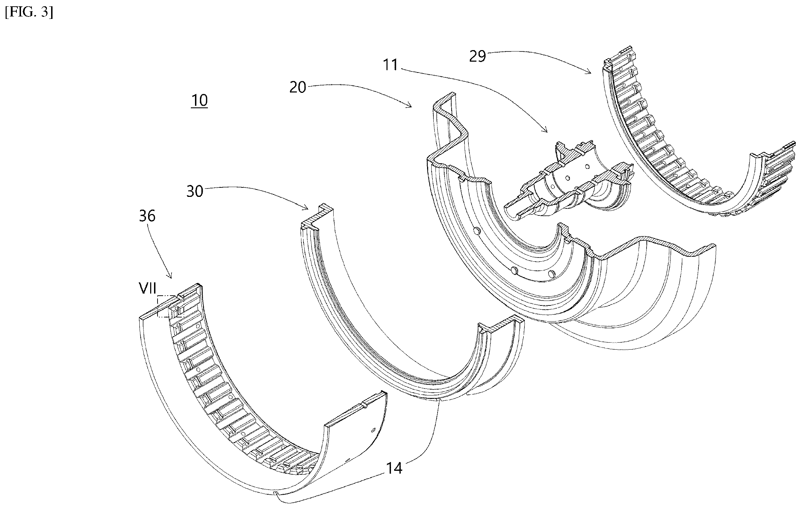

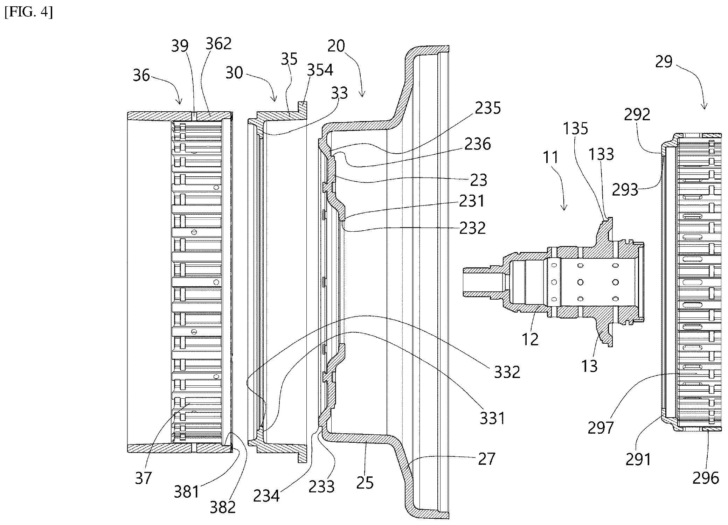

Hereinafter, an exemplary embodiment of the rotor hub, which constitutes the above-mentioned hybrid drive module, will be described with reference to FIGS. 3 to 8.

As described above, the rotor hub 10 includes the hub shaft 11, the front cover 20, the connector 30, the outer carrier 36, and the lock-up clutch carrier 29 that are manufactured as separate components and then assembled. These components may be integrated into the rotor hub 10 by a joining method such as laser welding.

The hub shaft 11 is a component disposed at the centripetal side and extending in the axial direction among the components that constitute the rotor hub 10. The hub shaft 11 includes the hollow shaft 12 extending in the axial direction, and the first radial extension portion 13 extending in the centrifugal direction from the outer periphery of the shaft 12.

The piston plate 41 of the engine clutches 47, 48, and 36 and the lock-up piston 81 of the lock-up clutches 29, 82, and 83, which have been described above, are slidably installed on the outer periphery of the shaft 12 and disposed forward and rearward of the first radial extension portion 13. Oil holes are provided in the shaft 12 to supply hydraulic pressure for controlling the operations of the engine clutches 47, 48, and 36 and the lock-up clutches 29, 82, and 83.

The front cover 20 is manufactured as a component provided separately from the hub shaft 11 and connected to the hub shaft 11. The front cover 20 has a shape extending radially outward from a connection portion connected to the hub shaft 11.

The front cover 20 further includes the second radial extension portion 23 connected to the first radial extension portion 13 of the hub shaft 11 and extending in the centrifugal direction from the first radial extension portion 13, the rearward extension portion 25 extending rearward from the centrifugal end of the second radial extension portion 23, and the radially enlarged portion 27 connected to the rear end of the rearward extension portion 25 and extending in the centrifugal direction.

The centripetal side of the second radial extension portion 23 is connected to the hub shaft 11 by welding, the rear surface of the second radial extension portion 23 is connected to the lock-up clutch carrier 29, and the front surface of the second radial extension portion 23 is connected to the connector 30 by welding. The lock-up clutch carrier 29 may be connected radially inward of the connector 30 so that the connector 30 and the welded portion do not overlap each other.

In order to align the hub shaft 11 and the front cover 20, the centrifugal end of the first radial extension portion 13 of the hub shaft 11 has a first radial junction surface 135 having a normal line in the centrifugal direction, and a first axial junction surface 133 further extending in the centrifugal direction than the first radial junction surface 135 and having a normal line directed forward, and the centripetal end of the second radial extension portion 23 of the front cover 20 has a second radial junction surface 232 having a normal line in the centripetal direction, and a second axial junction surface 231 further extending in the centrifugal direction than the second radial junction surface 232 and having a normal line directed rearward.

The first axial junction surface 133 of the hub shaft 11 and the second axial junction surface 231 of the front cover 20 face and adjoin each other in the axial direction, such that the axial position of the front cover 20 with respect to the hub shaft 11 is restricted. The first radial junction surface 135 of the hub shaft 11 and the second radial junction surface 232 of the front cover 20 face and adjoin each other in the radial direction, such that the hub shaft 11 and a center of the front cover 20 are aligned.

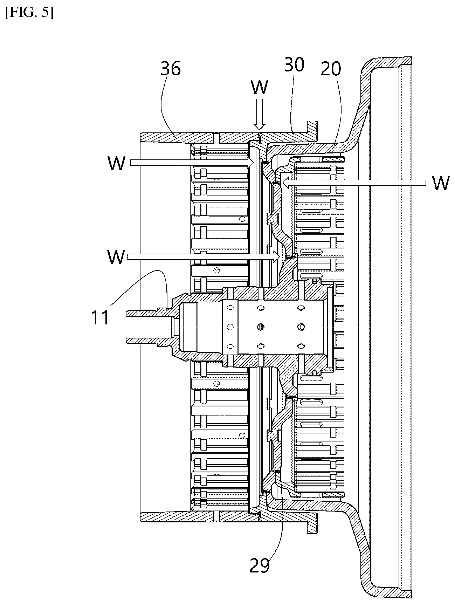

The junction portion between the first radial junction surface 135 of the hub shaft 11 and the second radial junction surface 232 of the front cover 20 are welded from the front side, as illustrated in FIG. 5. For example, the welding may be performed by emitting laser beams. As illustrated, because no component is provided forward of the corresponding welded portion, the laser beams are easily emitted to the welded portion.

In order to improve the engagement precision of the welded portion, the first axial junction surface 133, the first radial junction surface 135, the second axial junction surface 231, and the second radial junction surface 232 may be provided by additional processing, e.g., machining.

The connector 30 is disposed forward of the second radial extension portion 23 of the front cover 20 and disposed to be closer to the centrifugal side than the rearward extension portion 25.

The connector 30 has the third radial extension portion 33 connected to the front cover 20 and extending in the centrifugal direction from the front cover 20, the first axial extension portion 35 extending rearward from the centrifugal end of the third radial extension portion 33, and a stopper 354 extending radially outward from the rear end of the first axial extension portion 35 and configured to restrict the axial rear position of the rotor 16 with respect to the rotor hub 10.

The third radial extension portion 33 is disposed forward of the front cover 20 and connected to the second radial extension portion 23. In this state, the first axial extension portion 35 is disposed to be closer to the centrifugal side than the rearward extension portion 25, and the radially enlarged portion 27 of the front cover 20 is disposed rearward of the connector 30 and further extends radially outward than the connector 30.

In order to align the front cover 20 and the connector 30, the front surface of the second radial extension portion 23 of the front cover 20 has a third radial junction surface 234 having a normal line in the centrifugal direction, and a third axial junction surface 233 further extending in the centrifugal direction than the third radial junction surface 234 and having a normal line directed forward, and the centripetal end of the third radial extension portion 33 of the connector 30 has a fourth radial junction surface 332 having a normal line in the centripetal direction, and a fourth axial junction surface 331 further extending in the centrifugal direction than the fourth radial junction surface 332 and having a normal line directed rearward.

The third axial junction surface 233 of the front cover 20 and the fourth axial junction surface 331 of the connector 30 face and adjoin each other in the axial direction, such that the axial position of the connector 30 with respect to the front cover 20 is restricted. The third radial junction surface 234 of the front cover 20 and the fourth radial junction surface 332 of the connector 30 face and adjoin each other in the radial direction, such that the front cover 20 and a center of the connector 30 are aligned.

As illustrated in FIG. 5, the third radial junction surface 234 and the fourth radial junction surface 332 are welded from the front side. For example, the welding may be performed by emitting laser beams. As illustrated, because no component is provided forward of the corresponding welded portion, the laser beams are easily emitted to the welded portion.

In order to improve the engagement precision of the welded portion, the third axial junction surface 233, the third radial junction surface 234, the fourth axial junction surface 331, and the fourth radial junction surface 332 may be provided by additional processing, e.g., machining.

In order to easily process the inward teeth 37, the outer carrier 36 having the inward teeth 37 is connected to a front side of the connector 30 after the outer carrier 36 is manufactured as a component provided separately from the connector 30.

The outer carrier 36 has the second axial extension portion 362 extending in the axial direction. A rear end of the second axial extension portion 362 is connected to a front end of the connector 30.

In order to align the connector 30 and the outer carrier 36, a centrifugal side front end of the connector 30 has a fifth radial junction surface 352 having the normal line in the centrifugal direction, and a fifth axial junction surface 351 further extending in the centrifugal direction than the fifth radial junction surface 352 and having a normal line directed forward, and a rear end of the second axial extension portion 362 of the outer carrier 36 has a sixth radial junction surface 382 having a normal line in the centripetal direction, and a sixth axial junction surface 381 further extending in the centrifugal direction than the sixth radial junction surface 382 and having a normal line directed rearward.

The fifth axial junction surface 351 and the sixth axial junction surface 381 face and adjoin each other in the axial direction, such that the axial position of the outer carrier 36 with respect to the connector 30 is restricted. The fifth radial junction surface 352 and the sixth radial junction surface 382 face and adjoin each other in the radial direction, such that the connector 30 and a center of the outer carrier 36 are aligned.

As illustrated in FIG. 5, the fifth axial junction surface 351 and the sixth axial junction surface 381 may be welded to each other at the centrifugal side. For example, the welding may be performed by emitting laser beams. As illustrated, because no component is provided radially outward of the corresponding welded portion, the laser beams are easily emitted to the welded portion.

In order to improve the engagement precision of the welded portion, the fifth axial junction surface 351, the fifth radial junction surface 352, the sixth axial junction surface 381, and the sixth radial junction surface 382 may be provided by additional processing, e.g., machining.

An outer peripheral surface of the first axial extension portion 35 of the connector 30 and an outer peripheral surface of the second axial extension portion 362 of the outer carrier 36 are connected in the axial direction and provide a surface for supporting the rotor 16.

In order to accurately align and assemble the rotor 16 and the rotor hub 10, the two outer peripheral surfaces need to be processed so as to be smoothly connected.

Meanwhile, the above-mentioned welded portion is provided on the connection portion of the outer peripheral surface, and a surface of the welded portion may not be smooth. However, as described above, in order to accurately align and assemble the rotor 16 and the rotor hub 10, the outer peripheral surface of the first axial extension portion 35 and the outer peripheral surface of the second axial extension portion 362 of the outer carrier 36 may be subjected to the surface processing anyway. Therefore, the entire surface may be smoothly processed by performing the surface processing on the outer peripheral surface of the first axial extension portion 35, the outer peripheral surface of the second axial extension portion 362 of the outer carrier 36, and the welded portion after the welding process.

One or two or more key grooves 14 may be provided on the cylindrical outer periphery surface, recessed in the radial direction, and extending in the axial direction. Therefore, a circumferential position of the rotor 16 with respect to the rotor hub 10 may be restricted.

After the rotor 16 is externally inserted into the cylindrical outer periphery surface, a retainer 40 may be disposed forward of the rotor 16 and coupled to a front end of the second axial extension portion 362. The retainer 40 restricts an axial front position of the rotor 16 with respect to the rotor hub 10.

The inward teeth 37 of the outer carrier 36 may be provided on an inner periphery of the second axial extension portion 362, such that the friction plate 48 of the engine clutches 47, 48, and 36 may be installed on an inner peripheral surface of the outer carrier 36. The inward teeth 37 has a structure in which a plurality of body portions 371 extending in the axial direction and a plurality of groove portions 372 extending in the axial direction are alternately disposed in the circumferential direction.

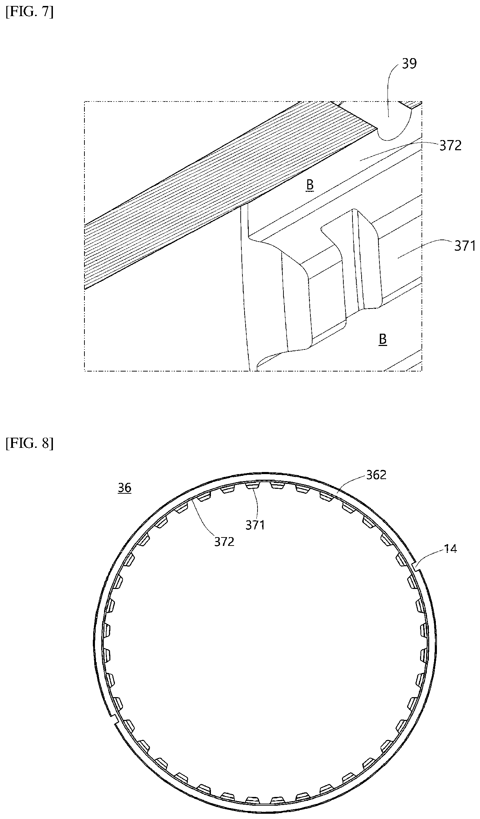

As illustrated in FIGS. 7 and 8, the outer carrier 36 has no portion further extending toward the centripetal side than an inner diameter corresponding to a bottom surfaces B of the plurality of groove portions 372, other than the body portion 371. Then, a space disposed radially inward of the bottom surface B of the groove portion 372 is configured as an empty space when viewed in the axial direction, and the groove portion 372 is easily formed by processing a groove in the body portion 371 in a state in which the groove portion 372 is not yet processed. For example, this processing may be configured as broaching processing.

In order to facilitate the processing of the groove portion 372, the inner peripheral surface of the second axial extension portion 362 may have a tapered shape having an inner diameter that gradually increases forward in the axial direction from the front sides of the inward teeth 37.

In addition, in order to facilitate the processing of the groove portion 372, the inner peripheral portion is machined from rear ends of the inward teeth 37 to a rear end of the second axial extension portion 362, such that the sixth axial junction surface 381 and the sixth radial junction surface 382 may be configured. With this processing, the inner diameter of the second axial extension portion 362 consequently increases toward the rear sides of the inward teeth 37, which further facilitates the processing of the groove portion 372.

That is, the configuration in which the fifth radial junction surface 352 and the fifth axial junction surface 351 of the connector 30 and the sixth radial junction surface 382 and the sixth axial junction surface 381 of the outer carrier 36 are configured as described above provides not only the function of aligning the connector 30 and the outer carrier 36 but also the effect of making it easier to process the inward teeth 37 on the inner periphery of the outer carrier 36.

The lock-up clutch carrier 29 may extend rearward from the connection portion connected to the front cover 20.

The lock-up clutch carrier 29 has the fourth radial extension portions 13, 23, and 33 connected to the second radial extension portion 23 of the front cover 20 and extending in the centrifugal direction from the connection portion, a third axial extension portion 296 extending rearward from centrifugal ends of the fourth radial extension portions 13, 23, and 33, and the inward concave-convex portion 297 provided on the inner periphery of the third axial extension portion 296 to install the lock-up friction plate 82 of the lock-up clutches 29, 82, and 83.

In order to align the front cover 20 and the lock-up clutch carrier 29, a rear surface of the second radial extension portion 23 of the front cover 20 has a seventh radial junction surface 236 having a normal line in the centrifugal direction, and a seventh axial junction surface 235 further extending in the centrifugal direction than the seventh radial junction surface 236 and having a normal line directed rearward, and a centripetal end of the fourth radial extension portions 13, 23, and 33 has an eighth radial junction surface 293 having a normal line in the centripetal direction, and an eighth axial junction surface 292 further extending in the centrifugal direction than the eighth radial junction surface 293 and having a normal line directed forward.

The seventh axial junction surface 235 and the eighth axial junction surface 292 face and adjoin each other in the axial direction, such that the axial position of the lock-up clutch carrier 29 with respect to the front cover 20 is restricted. The seventh radial junction surface 236 and the eighth radial junction surface 293 face and adjoin each other in the radial direction, such that the front cover 20 and a center of the lock-up clutch carrier 29 are aligned.

As illustrated in FIG. 5, the seventh radial junction surface 236 and the eighth radial junction surface 293 may be welded to each other at the rear side. For example, the welding may be performed by emitting laser beams. As illustrated, because no component is provided radially outward of the corresponding welded portion, the laser beams are easily emitted to the welded portion.

In order to improve the engagement precision of the welded portion, the seventh axial junction surface 235, the seventh radial junction surface 236, the eighth axial junction surface 292, and the eighth radial junction surface 293 may be provided by additional processing, e.g., machining.

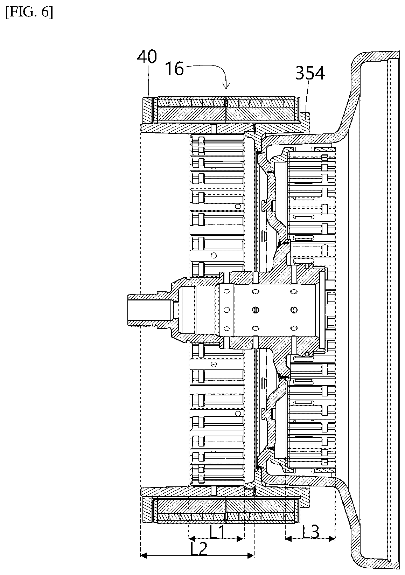

With reference to FIG. 6, an axial length L3 of the third axial extension portion 296 of the lock-up clutch carrier 29 may be set to be shorter than an axial length of the rearward extension portion 25 of the front cover 20.

The lock-up clutch carrier 29 may be manufactured by sheet metal pressing. Thereafter, the third axial extension portion 296 of the lock-up clutch carrier 29 may be formed by performing drawing processing on a sheet-shaped metal by using a press. It is difficult for the drawing processing using the press to form the inward concave-convex portion only in a part of a drawing section because of the characteristics of the processing method. That is, the inward concave-convex portion 297 is formed in an entire extension section of the third axial extension portion 296 when the inward concave-convex portion 297 is formed on the third axial extension portion 296 of the lock-up clutch carrier 29 by means of the drawing process using the press. Meanwhile, because a drawing length, which may be formed, is limited when the teeth are formed by the drawing processing, it may be difficult to form the inward concave-convex portion 297 when the drawing length of the third axial extension portion 296 increases.

The front cover 20 may also be manufactured by performing pressing processing on a metal sheet. In this case, when the inward concave-convex portion is formed on the rearward extension portion 25 of the front cover 20, it may be thought that a separate component of the lock-up clutch carrier 29 does not need to be applied. However, because the length of the rearward extension portion 25 of the front cover 20 is longer than the axial length of the inward concave-convex portion required for the lock-up clutches 29, 82, and 83, it may be difficult to form the inward concave-convex portion on the rearward extension portion 25 of the front cover 20. Further, because the radially enlarged portion 27 is connected back to the rear end of the rearward extension portion 25, it is inevitably more difficult to perform the process of forming the inward concave-convex portion on the inner peripheral surface of the rearward extension portion 25.

In the embodiment, the inward concave-convex portion 297 for supporting the friction plate of the lock-up clutch is implemented on the separate component of the lock-up clutch carrier 29, such that the inward concave-convex portion 297 is easily processed. Further, when the lock-up clutch carrier 29 is implemented as a separate component and the inward concave-convex portion 297 is processed as described above, the inward concave-convex portion 297 may be provided in the axial direction only by a length required to configure the lock-up clutch. This component design may be more effective in case that the length of the rearward extension portion 25 is longer than the length of the inward concave-convex portion 297 required to configure the lock-up clutches 29, 82, and 83, as in the embodiment.

Meanwhile, the outer carrier 36 at least needs to have an axial length required to support the rotor 16. In contrast, an axial length L1 of the inward teeth 37 required for the engine clutches 47, 48, and 36 may be shorter than an axial length of the outer carrier 36. Further, the axial length of the outer carrier 36 may be long to the extent that it is difficult to form the inward teeth 37 on the outer carrier 36 by pressing processing.

Therefore, the inward teeth 37 of the outer carrier 36 may be more preferably formed by broaching processing than by drawing processing using a press. In case that the inward teeth 37 are processed on the outer carrier 36 by broaching processing as described above, the processing may be performed without difficulty even though the axial length L1 of the inward teeth 37 is set to be longer than the axial length L3 of the inward concave-convex portion 297.

Further, because the inward teeth 37 are processed by broaching processing, the inward teeth 37 may be formed only in a partial section of the axial section of the outer carrier 36, and the component having a shape having a smooth peripheral surface may be formed in the other section, unlike the drawing processing or flow forming processing.

According to the rotor hub structure of the embodiment, the teeth may be formed only in the axial section in which the components need to be restricted by each other in the circumferential direction, and it is possible to minimize a degree to which a meaningless tooth shape is provided in the other portion.

According to the embodiment, the inward concave-convex portion 297 of the lock-up clutch carrier 29 may be formed by drawing processing using a press, and the inward teeth 37 of the outer carrier 36, which are relatively longer in extension length than the inward concave-convex portion 297, may be formed by broaching processing.

Meanwhile, because heat is generated from the rotor 16 and the friction plate 48 of the engine clutches 47, 48, and 36, oil needs to circulate to cool the rotor 16 and the friction plate 48. The rotor 16 is positioned radially outward of the friction plate 48, and the oil flows in the centrifugal direction by receiving a centrifugal force by the rotation of the rotor hub 10. Therefore, the cooling flow path may be more efficiently designed, such that the oil circulating to cool the friction plate 48 of the engine clutches 47, 48, and 36 also cools the rotor 16.

According to the embodiment, an axial center of the rotor 16 is disposed in a first axial section L1 in which the inward teeth 37 extends in the axial direction. Further, an oil hole 39, which connects a radial inner space and an outer space of the outer carrier 36 so that the radial inner space and the outer space communicate with each other, is provided in the first axial section L1. Therefore, the oil hole 39 may be disposed in the vicinity of a center of the rotor 16 based on the axial direction.

Therefore, the oil, which cools the friction plate 48 installed on the inward teeth 37, moves toward the rotor 16 through the oil hole 39 and cools the rotor 16, such that the rotor 16 may be more efficiently cooled.

According to the embodiment, the axial extension portions 35 and 362 of the rotor hub 10 for supporting the rotor 16 are configured by the outer carrier 36 and the connector 30, such that a larger portion of the first axial section L1 may be shaped to be is disposed at the rear side based on the axial central portion of a second axial section L2 in which the outer carrier 36 extends in the axial direction.

While the present invention has been described above with reference to the accompanying drawings, the present invention is not limited to the drawings and the embodiments disclosed in the present specification, and it is apparent that the present invention may be variously changed by those skilled in the art without departing from the technical spirit of the present invention. Further, even though the operational effects of the configurations of the present invention have not been explicitly disclosed and described in the description of the embodiment of the present invention, the effects, which can be expected by the corresponding configurations, should, of course, be acceptable.

## Claims

1. A rotor hub (10) for a hybrid drive module, in which a driving shaft (45) connected to an engine is disposed forward, and an output hub (70) connected to a transmission is disposed rearward, the rotor hub (10) comprising:
a hub shaft (11) disposed at a centripetal side and extending in an axial direction;
a front cover (20) manufactured as a component provided separately from the hub shaft (11), connected to the hub shaft (11), and extending radially outward from the hub shaft (11);
a connector (30) manufactured as a component provided separately from the front cover (20), connected to the front cover (20), and disposed to be closer to a centrifugal side than the front cover (20); and
an outer carrier (36) manufactured as a component provided separately from the connector (30), connected to the connector (30), extending forward from the connector (30), and having an inner periphery on which inward teeth (37) for installing a friction plate (48) are provided,
wherein an outer periphery of the connector (30) and an outer periphery of the outer carrier (36) provide a surface for supporting a rotor (16).

2. The rotor hub of claim 1, wherein the inward teeth (37) of the outer carrier (36) comprise a structure in which a plurality of body portions (371) extending in the axial direction and a plurality of groove portions (372) extending in the axial direction are alternately disposed in a circumferential direction, and
wherein the outer carrier (36) has no portion further extending inward from an inner diameter corresponding to bottom surfaces of the plurality of groove portions (372), other than the body portion (371).

3. The rotor hub of claim 1, wherein the hub shaft (11) comprises:
a shaft (12) extending in the axial direction; and
a first radial extension portion (13) extending in a centrifugal direction from an outer periphery of the shaft (12),
wherein the front cover (20) comprises a second radial extension portion (23) connected to the first radial extension portion (13) and extending in the centrifugal direction from the first radial extension portion (13),
wherein a centrifugal end of the first radial extension portion (13) has a first radial junction surface (135) having a normal line in the centrifugal direction, and a first axial junction surface (133) further extending in the centrifugal direction than the first radial junction surface (135) and having a normal line in the axial direction,
wherein a centripetal end of the second radial extension portion (23) has a second radial junction surface (232) having a normal line in a centripetal direction, and a second axial junction surface (231) further extending in the centrifugal direction than the second radial junction surface (232) and having a normal line in the axial direction,
wherein the first axial junction surface (133) and the second axial junction surface (231) face and adjoin each other in the axial direction,
wherein the first radial junction surface (135) and the second radial junction surface (232) face and adjoin each other in the radial direction, and
wherein junction portions of the first radial junction surface (135) and the second radial junction surface (232) welded to each other at sides opposite to the first axial junction surface (133) and the second axial junction surface (231) in the axial direction.

4. The rotor hub of claim 1, wherein the front cover (20) comprises:
a second radial extension portion (23) connected to the hub shaft (11) and extending in a centrifugal direction from the hub shaft (11); and
a rearward extension portion (25) extending rearward from a centrifugal end of the second radial extension portion (23),
wherein a front surface of the second radial extension portion (23) has a third radial junction surface (234) having a normal line in the centrifugal direction, and a third axial junction surface (233) further extending in the centrifugal direction than the third radial junction surface (234) and having a normal line directed forward,
wherein the connector (30) comprises:
a third radial extension portion (33) connected to the front cover (20) and extending in the centrifugal direction from the front cover (20); and
a first axial extension portion (35) extending rearward from a centrifugal end of the third radial extension portion (33),
wherein the centripetal end of the third radial extension portion (33) has a fourth radial junction surface (332) having a normal line in a centripetal direction, and a fourth axial junction surface (331) further extending in the centrifugal direction than the fourth radial junction surface (332) and having a normal line directed rearward,
wherein the third axial junction surface (233) and the fourth axial junction surface (331) face and adjoin each other in the axial direction,
wherein the third radial junction surface (234) and the fourth radial junction surface (332) face and adjoin each other in the radial direction, and
wherein the third radial junction surface (234) and the fourth radial junction surface (332) are welded to each other at front sides thereof.

5. The rotor hub of claim 4, wherein the first axial extension portion (35) is disposed to be closer to the centrifugal side than the rearward extension portion (25).

6. The rotor hub of claim 5, wherein the front cover (20) further has a radially enlarged portion (27) connected to a rear end of the rearward extension portion (25) and extending in the centrifugal direction, and
wherein the radially enlarged portion (27) is disposed rearward of the connector (30) and further extends outward in the radial direction than the connector (30).

7. The rotor hub of claim 4, wherein a stopper (354) is provided at a rear end of the first axial extension portion (35) and extends radially outward.

8. The rotor hub of claim 1, wherein the connector (30) has a first axial extension portion (35) extending in the axial direction,
wherein a front end of the first axial extension portion (35) has a fifth radial junction surface (352) having a normal line in a centrifugal direction, and a fifth axial junction surface (351) further extending in the centrifugal direction than the fifth radial junction surface (352) and having a normal line directed forward,
wherein the outer carrier (36) has a second axial extension portion (362) extending in the axial direction,
wherein a rear end of the second axial extension portion (362) has a sixth radial junction surface (382) having a normal line in a centripetal direction, and a sixth axial junction surface (381) further extending in the centrifugal direction than the sixth radial junction surface (382) and having a normal line directed rearward,
wherein the fifth axial junction surface (351) and the sixth axial junction surface (381) face and adjoin each other in the axial direction,
wherein the fifth radial junction surface (352) and the sixth radial junction surface (382) face and adjoin each other in the radial direction, and
wherein the fifth axial junction surface (351) and the sixth axial junction surface (381) are welded to each other at centrifugal sides thereof.

9. The rotor hub of claim 8, wherein a welded portion between the fifth axial junction surface (351) and the sixth axial junction surface (381) is processed together with an outer peripheral surface of the first axial extension portion (35) and an outer peripheral surface of the second axial extension portion (362) to constitute one cylindrical outer periphery surface.

10. The rotor hub of claim 9, wherein a welded portion between the fifth axial junction surface (351) and the sixth axial junction surface (381) has a key groove (14) radially recessed in the first axial extension portion (35) and the outer periphery surface of the second axial extension portion (362) and extending in the axial direction.

11. The rotor hub of claim 1, further comprising:
a lock-up clutch carrier (29) manufactured as a component provided separately from the front cover (20), connected to the front cover (20), extending rearward from the front cover (20), and having an inner periphery on which an inward concave-convex portion (297) for installing a lock-up friction plate (82) is provided,
wherein the front cover (20) has a second radial extension portion (23) connected to the hub shaft (11) and extending in a centrifugal direction from the hub shaft (11),
wherein a rear surface of the second radial extension portion (23) has a seventh radial junction surface (236) having a normal line in the centrifugal direction, and a seventh axial junction surface (235) further extending in the centrifugal direction than the seventh radial junction surface (236) and having a normal line directed rearward,
wherein the lock-up clutch carrier (29) comprises:
fourth radial extension portions (13, 23, and 33) connected to the second radial extension portion (23) and extending in the centrifugal direction from connection portions; and
a third axial extension portion (296) extending rearward from centrifugal ends of the fourth radial extension portions (13, 23, and 33),
wherein the centripetal end of the fourth radial extension portions (13, 23, and 33) has an eighth radial junction surface (293) having a normal line in a centripetal direction, and an eighth axial junction surface (292) further extending in the centrifugal direction than the eighth radial junction surface (293) and having a normal line directed forward,
wherein the seventh axial junction surface (235) and the eighth axial junction surface (292) face and adjoin each other in the axial direction,
wherein the seventh radial junction surface (236) and the eighth radial junction surface (293) face and adjoin each other in the radial direction, and
wherein the seventh radial junction surface (236) and the eighth radial junction surface (293) are welded to each other at rear sides thereof.

12. The rotor hub of claim 11, wherein the front cover (20) further comprises a rearward extension portion (25) extending rearward from a centrifugal end of the second radial extension portion (23), and
wherein an axial length (L3) of the third axial extension portion (296) is shorter than an axial length of the rearward extension portion (25).

13. The rotor hub of claim 11, wherein an axial length (L3) of the inward concave-convex portion (297) is shorter than an axial length (L1) of the inward teeth (37).

14. A hybrid drive module comprising the rotor hub (10) of any one of claims 1 to 13.

15. The hybrid drive module of claim 14, further comprising:
the rotor (16) installed on the outer periphery of the connector (30) and the outer periphery of the outer carrier (36),
wherein a section in which the inward teeth (37) extend in the axial direction defines a first axial section (L1),
wherein an axial center of the rotor (16) is disposed in the first axial section in the axial direction, and
wherein an oil hole (39) is provided in the first axial section (L1) of the outer carrier (36) and connects an inner space and an outer space, which are disposed radially inward and outward of the inward teeth (37), respectively, and an outer space so that the inner space and the outer space communicate with each other.

16. The hybrid drive module of claim 15, wherein a section in which the outer carrier (36) extends in the axial direction defines a second axial section (L2), and
wherein a larger portion of the first axial section (L1) is disposed at a rear side based on an axial central portion of the second axial section (L2).
